# EUROPÄISCHE PATENTSCHRIFT

(11) **EP 0 415 041 B1**
(45) Veröffentlichungstag und Bekanntmachung des Hinweises auf die Patenterteilung: **27.10.1993**
(21) Anmeldenummer: 90113240.7
(22) Anmeldetag: 11.07.1990
(51) Int. Cl.: B62D 33/06

(54) **Schlafliege im Fahrerhaus eines LKW's**
Sleeping berth in the driver's cab of a commercial vehicle
Couchette dans une cabine de conducteur d'un camion

(30) Priorität: 29.08.1989 DE 3928508
(43) Veröffentlichungstag der Anmeldung: 06.03.1991
(73) Patentinhaber: MAN Nutzfahrzeuge Aktiengesellschaft, 80976 München (DE)
(72) Erfinder: Watzek, Gerhard, D-8000 München 45 (DE); Heikens, Peter, D-8047 Karlsfeld (DE)

(56) Entgegenhaltungen:
- EP-A- 0 001 230
- DE-A- 3 507 529
- DE-A- 3 719 611
- US-A- 3 879 081

## Beschreibung

Die Erfindung bezieht sich auf eine Schlafliege im Fahrerhaus eines Lkw, insbesondere obere Schlafliege, wobei die Schlafliege zweiteilig ausgebildet ist und aus einer Basisliege und einem Schwenkteil besteht, wobei das Schwenkteil schwenkbar und verriegelbar ist.

Eine solche Schlafliege ist nach der DE-A-3719 611 bekannt.

Im Zuge der Rationalisierung und Optimierung der Transportleistung werden die Fahrerhäuser zugunsten einer größeren Ladefläche zunehmend schmaler gebaut, andererseits soll mit zunehmendem Komfortbedarf die geforderte Mindestbreite der Schlafliege von 600 mm auf 700 mm und mehr anwachsen. Diese gegeneinander wirkenden Forderungen sind an sich nicht vereinbar mit dem Platzbedarf für Fahrer und Fahrersitz. Als nur bedingt akzeptable Lösung ist die obere Schlafliege während der Fahrt in Abhängigkeit vom Fahrerhauskonzept mehr oder weniger ausgespart. Eine weitere wichtige Forderung hinsichtlich der Schlafsituation ist eine Sicherung für den schlafenden Fahrer/Beifahrer während der Fahrt. Dafür gibt es verschiedene mehr oder weniger gute Lösungen in Form von Gurten, Netzen oder hochstehenden Kopfstützen der davorstehenden Sitze, sofern die Kopfstützen um ca. 250 mm über die belastete Liegenoberfläche reichen.

Durch das Aussparen und der damit verbundenen ungeraden, also abgeknickten Liegenvorderkante ist der Einbau eines durchgehenden Netzes oder Rollos kaum möglich.

Es ist eine zweiteilige Schlafliege nach der EP-A1-0 001 230 bekannt, bei der die beiden Schlafliegenteile gelenkig miteinander verbunden sind. Die Schlafliege kann aus einer gesamtheitlich horizontalen Gebrauchslage in eine Staulage verklappt werden, bei der eine Teilliege an der Fahrerhausrückwand, die andere im hinteren Bereich des Fahrerhausdaches anliegt.

Der Erfindung liegt die Aufgabe zugrunde, eine obere Schlafliege zu schaffen, die während des Fahrzustandes genügend Platz für den Fahrersitz zuläßt und im weiteren eine Sicherung für den schlafenden Fahrer/Beifahrer ermöglicht.

Dies wird erfindungsgemäß dadurch gelöst, daß die Schlafliege im Fahrersitz-Rücklehnenbereich ausgespart ist und daß das Schwenkteil dazu komplementär ausgestaltet ist, wobei das Schwenkteil bei sich horizontal erstreckender Basisliege separat in einer vertikalen Position über der Aussparung verriegelbar ist. Zusammen mit der Liegen-Aufhängekinematik ergibt sich solcherart ein statisch bestimmtes System und somit eine wirksame Schlafliegenherausfallsicherung im Kopf/Schulterbereich. Der Rest wird, wie bisher, mit einem Rollo gesichert. Auch wird so die zweite Anforderung an ein komfortables Fahrerhaus erfüllt, daß, auch bei großer Körperlänge des Fahrers, der Fahrersitz mit Rückenlehne weit genug, d.h. in die Aussparung der Liege, hineinpositioniert werden kann.

Nach einem weiteren Merkmal der Erfindung ist das Schwenkteil über Hebel mit der Basisliege verbunden, und es sind die Hebel einenendes drehbar in oder an der Rückwand der Aussparung und anderenendes an oder in dem Vorderwandbereich des Schwenkteils drehbar gelagert, wobei die Hebel in der horizontalen Lage des Schwenkteils verdeckt in seinem unteren Bereich liegen. Die Schwenkung ist zweistufig, wobei die erste Schwenkung um die Achse des Schwenkteils und die zweite Schwenkung um die Achse in der Basisliege erfolgt. Auf diese Weise ist die Kinematik im Komplementärzustand des Schwenkteils mit der Basisliege total verdeckt. Bei Ausklappbedarf kann man das Schwenkteil elegant aus dem Komplementärzustand nach außen herausklappen und dann mit einer zweiten Schwenkbewegung um die in der Basisliege befindliche Achse in den Vertikalzustand über der Aussparung anheben, so daß nunmehr der auf der Liege Schlafende gegen Herausfallen abgesichert ist. Wesentlich für das Funktionieren der erfindungsgemäßen Einrichtung ist, daß an der Außenseite des Schwenkteils eine federvorgespannte Verriegelungseinrichtung angeordnet ist, deren Bolzen mit Bohrungen eines wandseitigen, mit Aufgleitschrägen versehenen, festen Aufsatzteiles in Eingriff bringbar sind. Solcherart wird das Schwenkteil im senkrecht angehobenen Zustand statisch bestimmt und stabilisiert.

Nach einem ergänzenden Merkmal ist auf der inneren Schrägseite des Schwenkteils, in ihr versenkt, eine Betätigungseinrichtung für die Verriegelungseinrichtung vorgesehen. In dem die Verriegelungseinrichtung versenkt in der inneren Schrägseite liegt, ist sie im Komplementärzustand der Liege nicht sichtbar und mithin auch nicht zu beschädigen. Erst im vertikalen Zustand des Schwenkteils ergibt sich die Notwendigkeit zur Entriegelung an die Betätigungseinrichtung heranzukommen, was dann auch möglich ist, weil die Schrägseite freiliegt.

Die Erfindung ist in einem Ausführungsbeispiel dargestellt und beschrieben.

Es zeigen:
- Fig. 1: eine obere Schlafliege in der perspektivischen Draufsicht,
- Fig. 2: eine obere Schlafliege in Seitenansicht in den verschiedenen Klappzuständen,

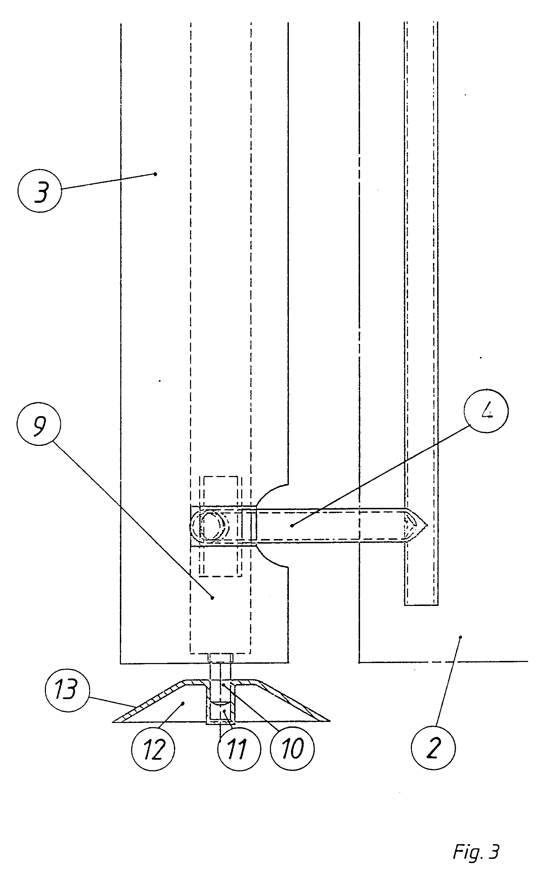

- Fig.3: einen Ausschnitt mit Rasteinrichtung für das Schwenkteil.

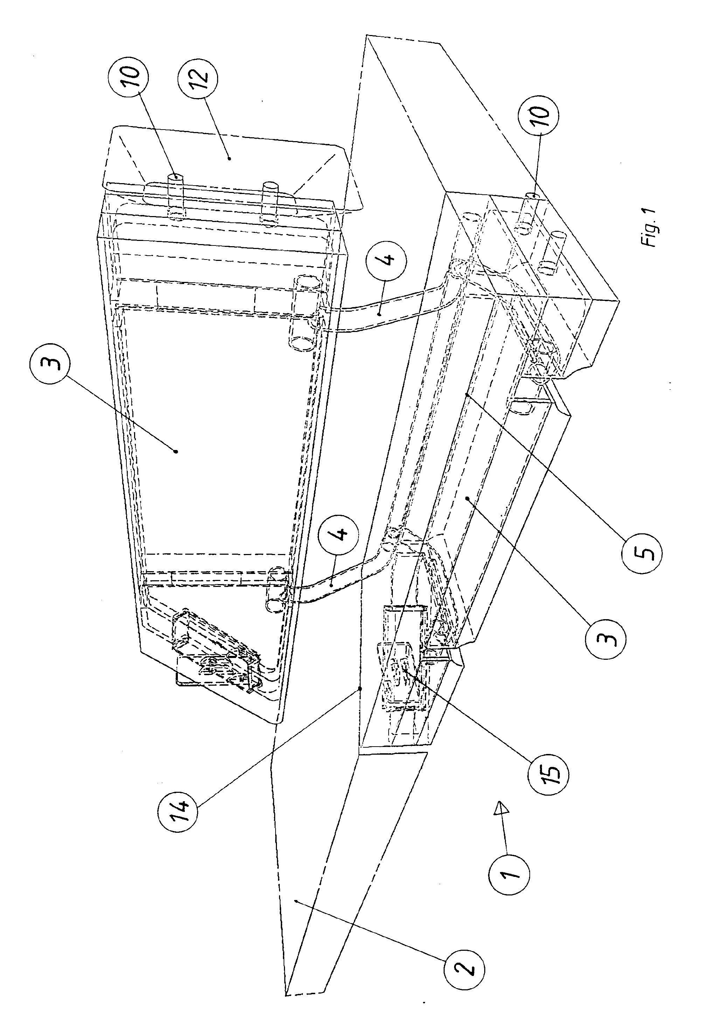

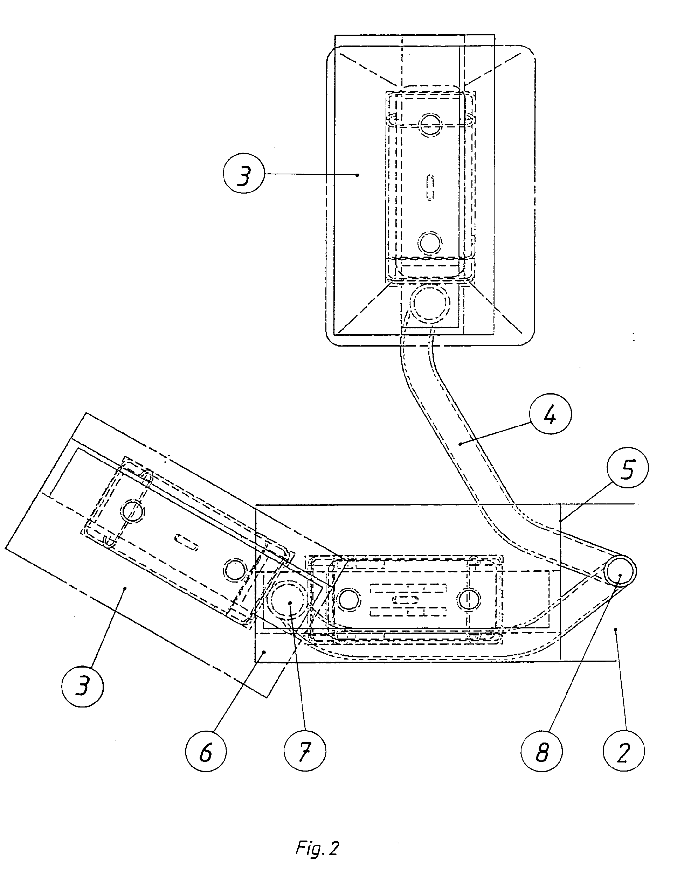

Fig. 1 zeigt eine obere Schlafliege 1, bestehend aus einer Basisliege 2 mit einer Aussparung, in der komplementär ein Schwenkteil 3 angeordnet ist. Das Schwenkteil 3 ist über Hebel 4 mit der Rückwand 5 der Aussparung verbunden, und zwar derart, daß die Hebel 4 einenendes an oder in der Rückwand an der Achse 8 und anderenendes im Vorderwandbereich des Schwenkteils 3 an der um die Achse 7 drehbar gelagert sind. Solcherart wird eine stufenweise Schwenkung, siehe auch Abbildung 2, möglich, wobei in einem ersten Schwenkvorgang das Schwenkteil 3 aus seiner horizontalen Komplementärstellung um die Achse 7 in eine nach außen gerichtete Schwenkstellung gedreht wird. In einem zweiten Schwenkvorgang wird dann die schräg ausgeschwenkte Liege um die Achse 8 in ihre Vertikalstellung über der Aussparung angehoben. In der Vertikalstellung kommt eine Verriegelungseinrichtung 9 mit den Bohrungen 11 eines an der Fahrerhausseitenwand fest angebrachten Aufsatzteils 12 in Eingriff. Das Aufsatzteil 12 weist auch Gleitschrägen 13 auf, so daß die Einrastung der Bolzen 10 in die Löcher 11 mit geringem Kraftaufwand möglich ist. An der Schrägseite 14 des Schwenkteils 3 ist, in ihr versenkt, eine Betätigungseinrichtung 15 für die Verriegelungseinrichtung 9 angeordnet. Durch diese spezielle Ausgestaltung ist im Komplementärzustand der Liege die Betätigungseinrichtung 15 nicht sichtbar und damit auch nicht zu beschädigen oder willkürlich zu betätigen. Erst im vertikalen, sichernden Zustand des Schwenkteils 3 ist ein Zugriff auf die Betätigungseinrichtung möglich, um die Bolzen 10 aus den Löchern 11 herauszuziehen um so das Schwenkteil 3 wieder in seinen die Liege ergänzenden Komplementärzustand versetzen zu können.

### Bezugszeichenliste

- 1: Schlafliege
- 2: Basisliege
- 3: Schwenkteil
- 4: Hebel
- 5: Rückwand der Aussparung
- 6: Vorderwandbereich des Schwenkteils
- 7: Achse des Schwenkteils
- 8: Achse der Basisliege
- 9: Verriegelungseinrichtung
- 10: Bolzen von 9
- 11: Bohrungen
- 12: Aufsatzteil
- 13: Schrägen an 12
- 14: innere Schrägseite von 3
- 15: Betätigungseinrichtung für 9

## Patentansprüche

1. Schlafliege im Fahrerhaus eines Lkw, insbesondere obere Schlafliege, wobei die Schlafliege (1) zweiteilig ausgebildet ist und aus einer Basisliege (2) und einem Schwenkteil (3) besteht, wobei das Schwenkteil (3) schwenkbar und verriegelbar ist, wobei, die Schlafliege (1) im Fahrersitz-Rücklehnenbereich ausgespart ist und das Schwenkteil (3) komplementär ausgestaltet ist, dadurch gekennzeichnet, daß das Schwenkteil (3) bei sich horizontal erstreckender Basisliege (2) separat in einer vertikalen Position über der Aussparung mit der Fahverhausseitenwand verriegelbar ist.

2. Schlafliege nach Anspruch 1, dadurch gekennzeichnet, daß das Schwenkteil (3) über Hebel (4) mit der Basisliege (2) verbunden ist und die Hebel (4) einenendes in oder an der Rückwand (5) der Aussparung und anderenendes an oder in dem Vorderwandbereich (6) des Schwenkteils (3) drehbar gelagert sind, wobei die Hebel (4) in der horizontalen Lage des Schwenkteils (3) verdeckt in seinem unteren Bereich liegen.

3. Schlafliege nach Anspruch 1 oder 2, dadurch gekennzeichnet, daß die Schwenkung 2-stufig ist, wobei die erste Schwenkung um die Achse (7) des Schwenkteils (3) und die zweite Schwenkung um die Achse (8) in der Basisliege (2) erfolgt.

4. Schlafliege nach den Ansprüchen 1 bis 3, dadurch gekennzeichnet, daß die Hebel (4) an ihren Enden gekröpft sind.

5. Schlafliege nach einem oder mehreren der Ansprüche 1 bis 4, dadurch gekennzeichnet, daß an der Außenseite des Schwenkteils (3) eine federvorgespannte Verriegelungseinrichtung (9) angeordnet ist, deren Bolzen (10) mit Bohrungen (11) eines wandseitigen, mit Aufgleitschrägen (13) versehenen, ortfesten Aufsatzteiles (12) in Eingriff bringbar sind.

6. Schlafliege nach einem oder mehreren der Ansprüche 1 bis 5, dadurch gekennzeichnet, daß auf der inneren Schrägseite (14) des Schwenkteils (3), in ihr versenkt, eine Betätigungseinrichtung (15) für die Verriegelungseinrichtung (9) vorgesehen ist.

## Claims

1. A sleeping berth in the driver's cab of a commercial vehicle, more particularly an upper sleeping berth, the sleeping berth (1) being constructed in two parts and comprising a base berth (2) and a pivoting part (3), the pivoting part (3) being pivotable and lockable, the sleeping berth (1) being recessed in the backrest region of the driver's seat and the pivoting part (9) being shaped in complementary fashion, characterised in that the pivoting part (3) can be locked separately in a vertical position above the recess to the driver's cab side wall with the base berth (2) extending horizontally.

2. A sleeping berth according to claim 1, characterised in that the pivoting part (3) is connected via levers (4) to the base berth (2) and the levers (4) are rotatably mounted at one end in or on the rear wall (5) of the recess and at the other end on or in the front wall region (6) of the pivoting part (3), the levers (4) lying covered in the lower region of the pivoting part (3) when the latter is in the horizontal position.

3. A sleeping berth according to claim 1 or 2, characterised in that the pivoting is effected in two stages, the first pivoting occurring about the axis (7) of the pivoting part (3) and the second pivoting about the axis (8) in the base berth (2).

4. A sleeping berth according to claims 1 to 3, characterised in that the levers (4) are cranked at their ends.

5. A sleeping berth according to one or more of claims 1 to 4, characterised in that a spring-pretensioned locking device (9) is arranged on the outside of the pivoting part (3), the bolts (10) of the said locking device being engageable with bores (11) in an attachment (12) which is fixed to the wall and comprises slide ramps (13).

6. A sleeping berth according to one or more of claims 1 to 5, characterised in that an actuating device (15) for the locking device (9) is provided sunk into the inner inclined side (14) of the pivoting part (3).

## Revendications

1. Couchette dans la cabine du conducteur d'un camion, en particulier couchette supérieure (1), réalisée en deux parties à savoir une couchette fixe (2) et une partie basculante (9) qui peut être verrouillée, la couchette (1) présentant dans la zone du dossier du siège du conducteur un évidement dont la partie basculante (9) constitue le complément, caractérisée en ce que la partie basculante (9) peut, séparément de la couchette fixe (2) à l'horizontale, être verrouillée sur une paroi latérale de la cabine dans une position verticale surplombant l'évidement.

2. Couchette selon la revendication 1, caractérisée en ce que la partie basculante (3) est reliée à la couchette fixe (1) par des leviers (4) dont chacun est monté pivotant par une extrémité sur ou dans la paroi arrière (5) de l'évidement et par l'autre extrémité sur ou dans la zone de la paroi antérieure (6) de la partie basculante (3) qui, lorsqu'elle est en position horizontale recouvre les leviers situés sous elle.

3. Couchette selon la revendication 1 ou 2, caractérisée en ce que le basculement s'effectue en deux phases, la première autour de l'axe (7) porté par la partie basculante, la deuxième autour de l'axe (8) porté par la couchette fixe (2).

4. Couchette selon les revendications 1 à 3, caractérisée en ce que les leviers (4) sont coudés à leurs extrémités.

5. Couchette selon une ou plusieurs des revendications 1 à 4, caractérisée en ce que la face externe de la partie basculante (3) porte un dispositif de verrouillage (9) à tension élastique, dont les broches (10) peuvent être engagées dans des trous (11) d'une applique (12) fixe située du côté de la paroi et munie de rampes obliques de glissement (13).

6. Couchette selon une ou plusieurs des revendications 1 à 5, caractérisée en ce que la partie basculante (3) porte, noyé dans sa surface interne (14) en oblique, un dispositif de commande (13) du verrouillage (9).
